# EUROPÄISCHE PATENTSCHRIFT

(11) **EP 1 379 935 B1**
(45) Veröffentlichungstag und Bekanntmachung des Hinweises auf die Patenterteilung: **22.06.2005**
(21) Anmeldenummer: 02737763.9
(22) Anmeldetag: 30.03.2002
(51) Int. Cl.: G06F 1/00

(54) **VERFAHREN ZUR AUTHENTIFIZIERUNG EINES ANWENDERS BEI EINEM ZUGANG ZU EINEM SOFTWAREBASIERTEN SYSTEM ÜBER EIN ZUGANGSMEDIUM**
METHOD FOR AUTHENTICATION OF A USER ON ACCESS TO A SOFTWARE-BASED SYSTEM BY MEANS OF AN ACCESS MEDIUM
PROCEDE D'AUTHENTIFICATION D'UN UTILISATEUR AU COURS DE L'ACCES A UN SYSTEME BASE SUR LOGICIEL, PAR L'INTERMEDIAIRE D'UN MOYEN D'ACCES

(30) Priorität: 12.04.2001 DE 10118267
(43) Veröffentlichungstag der Anmeldung: 14.01.2004
(73) Patentinhaber: ROBERT BOSCH GMBH, 70442 Stuttgart (DE)
(72) Erfinder: KOECHLING, Christian, 38108 Braunschweig (DE); MAY, Thomas, 38302 Wolfenbuettel (DE)
(86) Internationale Anmeldenummer: PCT/DE2002/001167
(87) Internationale Veröffentlichungsnummer: WO 2002/084455

(56) Entgegenhaltungen:
- EP-A- 1 150 452
- EP-A- 1 189 409
- PATIYOOT D ET AL: "Authentication protocols for wireless ATM networks" 1998 1ST. IEEE INTERNATIONAL CONFERENCE ON ATM. ICATM'98. CONFERENCE PROCEEDINGS. COLMAR, FRANCE, JUNE 22 - 24, 1998, IEEE INTERNATIONAL CONFERENCE ON ATM, NEW YORK, NY: IEEE, US, 22. Juni 1998 (1998-06-22), Seiten 87-96, XP010290990 ISBN: 0-7803-4982-2
- PING WAH WONG ET AL: "A Web-based secure system for the distributed printing of documents and images" IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, 4. Oktober 1998 (1998-10-04), Seiten 2-6, XP010308952 ISBN: 0-8186-8821-1
- LONG F ET AL: "Securing Internet sessions with Sorbet" ENGINEERING OF COMPLEX COMPUTER SYSTEMS, 1999. ICECCS '99. FIFTH IEEE INTERNATIONAL CONFERENCE ON LAS VEGAS, NV, USA 18-21 OCT. 1999, LOS ALAMITOS, CA, USA,IEEE COMPUT. SOC, US, 18. Oktober 1999 (1999-10-18), Seiten 2-8, XP010358447 ISBN: 0-7695-0434-5

## Beschreibung

### Stand der Technik

Die Erfindung geht aus von einem Verfahren zur Authentifizierung eines Anwenders bei einem Zugang zu einem softwarebasierten System nach der Gattung des unabhängigen Patentanspruchs.

Es ist bereits bekannt, dass die Kommunikation über einen zugänglichen Kommunikationskanal zwischen zwei Parteien, wenn die Kommunikation geschützt sein soll, durch die Verwendung von öffentlichen und privaten Schlüsseln realisiert sein kann. Dabei ist es so, dass der öffentliche Schlüssel zur Codierung verwendet wird und dann der private Schlüssel zur Decodierung. Jede Partei weist also einen öffentlichen Schlüssel und dazugehörigen privaten Schlüssel auf, wobei die öffentlichen Schlüssel dann zur Kommunikation ausgetauscht werden. Dies wird auch und vor allem bei softwarebasierten Systemen eingesetzt.

D. Patiyoot, S. J. Shepherd: "Authentication Protocols for Wireless ATM Networks" 1998 1st IEEE international conference on ATM. ICATM'98. Conference Proceedings. Colmar, France, June 22-24, 1998, IEEE, IEEE International Conference on ATM, New York, NY: IEEE, US, 22. Juni 1998, Seiten 87-96, XP010290990 ISBN: 0-7803-4982-2 offenbart die Authentifizierung eines Anwenders bei einem Zugang zu einem softwarebasierten System, bei dem zusätzlich zu einem ersten öffentlichen Schlüssel ein zweiter öffentlicher Schlüssel verwendet wird.

### Vorteile der Erfindung

Das erfindungsgemäße Verfahren zur Authentifizierung eines Anwenders bei einem Zugang zu einem softwarebasierten System über ein Zugangssystem mit den Merkmalen des unabhängigen Patentanspruchs hat demgegenüber dem Vorteil, dass die Authentifizierung beim Zugang zu softwarebasierten Systemen, die im Folgenden auch als Diensteserver bezeichnet werden, verwendet wird. Dabei werden folgende Vorteile realisiert: Der Anwender ruft nur den Dienst auf und braucht kein Paßwort oder PIN (Persönliche Identifikationsnummer) einzugeben. Es wird keine sichere Kommunikationsverbindung benötigt, d.h. es ist nicht notwendig, sicherzustellen, dass die Verbindung nicht abgehört werden kann. Dies ist insbesondere beim Funkzugriff, beispielsweise über Bluetooth wichtig. Auf diese Weise müssen keine nachträglichen Änderungen in Standards wie Bluetooth vorgenommen werden. Das erfindungsgemäße Verfahren ermöglicht weiterhin eine Verschlüsselung der Kommunikation mit dem Dienst, so dass persönliche Daten nicht abgehört werden können. Der Diensteserver kann die Ermittlung der Identität des Nutzers und die damit verbundene Datenspeicherung an ein zentrales System, also einen Registrierungsserver delegieren, auf das beispielsweise verschiedene voneinander unabhängige Diensteserver Zugriff haben. Dadurch braucht der Nutzer sich nicht bei jedem Dienst mit einer neuen Kennung zu identifizieren, sondern er kann dieselbe Kennung für unterschiedliche Dienste verwenden. Der Diensteserver kann bei der weiteren Kommunikation mit dem Nutzer selbst sicherstellen, dass er immer mit demselben Nutzer kommuniziert. Der gegebenenfalls in Anspruch genommene Registrierungsserver ist in die weitere Kommunikation dann nicht mehr involviert.

Durch die in den abhängigen Ansprüchen aufgeführten Maßnahmen und Weiterbildungen sind vorteilhafte Verbesserungen des im unabhängigen Patentanspruch angegebenen Verfahrens zur Authentifizierung eines Anwenders bei einem Zugang zu einem softwarebasierten System über ein Zugangsmedium möglich.

Besonders vorteilhaft ist, dass als Zugangsmedium das Internet verwendet wird. Damit ist es möglich, beispielsweise mit einem tragbaren elektronischen Begleiter einen sicheren Zugang zu einem Dienst, der im Internet angeboten wird, zu erlangen. Solche Dienste sind beispielsweise Bankdienste oder auch Einkaufsmöglichkeiten im Internet, die einen Zahlvorgang, beispielsweise über Kreditkarte verlangen. Der elektronische Begleiter kann vorteilhafterweise ein Mobiltelefon, ein persönlicher digitaler Assistent, ein Smartphone oder eine Fernbedienung sein. Der elektronische Begleiter wird im Folgenden auch als Terminal bezeichnet. Der Diensteserver kann ein Steuergerät in einem Kraftfahrzeug, z.B. ABS-Steuergerät oder ESP-Steuergerät, ein Bordcomputer im Fahrzeug, ein Autoradio, ein Navigationssystem, ein Gateway-Modul in einem Fahrzeug, das über ein beliebiges Bussystem, z.B. der an CAN, MOST oder IEEE1394 angeschlossen ist, oder ein zentrales Navigationssystem bei einem Serviceprovider außerhalb des Kraftfahrzeugs sein. Der Bordcomputer in einem Fahrzeug kann auch als Terminal verwendet werden, um dann über die Verbindung über einen Dienstserver ein softwarebasiertes System anzuwählen.

Das Zugangsmedium kann dabei vorteilhafterweise zumindest teilweise über eine Funkstrecke realisiert sein, beispielsweise über Bluetooth oder eine Infrarotübertragungsstrecke.

Weiterhin ist es von Vorteil, dass ein Registrierungsserver vorhanden ist, der mit dem Dienstserver verbindbar ist und der überprüft, ob der öffentliche Schlüssel des Anwenders bereits registriert ist oder nicht.

Durch die Verwendung einer Chipkarte ist es möglich, dass unabhängig vom Terminal ein Nutzer seine Verschlüsselungsinformationen auf der Chipkarte mit sich führt und dann auch stationäre Terminals, die allgemein zugänglich sind, verwenden kann.

Die Erfindung ist definiert wie im Anspruch 1.

### Zeichnung

Ausführungsbeispiele der Erfindung sind in der Zeichnung dargestellt und werden in der nachfolgenden Beschreibung näher erläutert. Es zeigt
Figur 1 ein Blockschaltbild der erfindungsgemäßen Vorrichtung und
Figur 2 ein Flußdiagramm des erfindungsgemäßen Verfahrens.

### Beschreibung

Anwender, die Dienste über softwarebasierte Systeme, also über Diensteserver angeboten bekommen, brauchen, um diese Dienste zu nutzen, ein Verfahren zur Authentifizierung. Der Anwender hat dabei selbst ein softwarebasiertes System, d.h. ein Terminal, zur Verfügung, über das er auf den Dienst zugreift und das die direkte Kommunikation mit dem Dienst übernimmt. Beispiele hierfür sind ein Mobiltelefon oder ein Rechner mit Zugriff auf das Internet, wobei der Rechner entweder nur dem Anwender zugänglich ist und/oder mit einem Chipkarten-Lesegerät oder Ähnlichem ausgestattet ist. Auf diesem Chipkarten-Lesegerät können dann die persönlichen Zugangsdaten gespeichert sein.

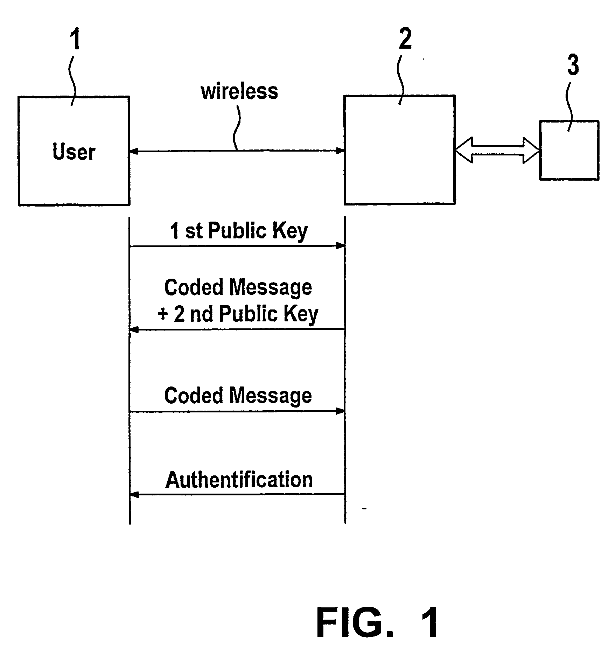

In Figur 1 ist als Blockschaltbild die erfindungsgemäße Vorrichtung dargestellt. Ein Anwenderterminal 1, das mit User bezeichnet ist, weist hier nichtdargestellte Eingabevorrichtungen und Darstellungsvorrichtungen auf, mit denen ein Anwender Dienste auswählt und die Dienste dann nutzt. Dieses Anwenderterminal 1 ist hier über eine drahtlose Verbindung, die mir Wireless gekennzeichnet ist, mit einem Diensteserver 2 verbunden. Der Diensteserver 2 ist über einen zweiten Datenein-/-ausgang mit einem Registrierungsserver 3 verbunden.

Wenn sich nun der Anwender mit seinem Terminal 1 bei dem Diensteserver 2 anmeldet, werden folgende Botschaften übertragen. Zunächst überträgt der Anwender mit seinem Terminal seinen ersten öffentlichen Schlüssel, hier mit Public Key gekennzeichnet. Der Diensteserver 2 überträgt diesen Public Key zum Registrierungsserver 3, der überprüft, ob ein Anwender anhand dieses Public Keys bereits registriert wurde. Ist das der Fall, dann überträgt der Registrierungsserver 3 dem Diensteserver 2, dass der Anwender bereits registriert ist. Ist das nicht der Fall, dann überträgt der Registrierungsserver 1 eine Fehlermeldung an den Diensteserver 2, der daraufhin dem Terminal 1 ebenfalls eine Fehlermeldung überträgt. Optional ist es hier dann möglich, dass sich der Anwender über eine entsprechende Prozedur registrieren lässt.

Ist nun der Anwender als registriert erkannt, dann überträgt der Diensteserver 2 eine mit dem öffentlichen Schlüssel des Anwenders codierte Zeichenkette, die dem Diensteserver 2 allein bekannt ist, und zusätzlich einen zweiten öffentlichen Schlüssel, der für den Diensteserver 2 charakteristisch ist, d.h. der Diensteserver 2 weist einen zweiten privaten Schlüssel auf, mit dem der Diensteserver 2 die mit dem zweiten öffentlichen Schlüssel codierten Nachrichten dekodieren kann.

Der Anwender wird dann mit seinem Terminal 1 und seinem privaten Schlüssel die Zeichenkette decodieren und dann mit dem zweiten öffentlichen Schlüssel wieder codieren und schließlich dem Diensteserver 2 zurückschicken. Der Diensteserver 2 führt nun die Dekodierung mit dem zweiten privaten Schlüssel durch. Stimmt nun die Zeichenkette, die ursprünglich gesendet wurde, mit der empfangenen bei dem Diensteserver 2 überein, dann ist der Anwender authentifiziert und die Nutzung des Dienstes durch den Anwender mit seinem Terminal 1 kann beginnen. Dabei wird dann auch weiterhin die Codierung mit den jeweiligen öffentlichen Schlüsseln, die hier verwendet wurden, eingesetzt, um die Kommunikation sicher zu gestalten, wenn es insbesondere um finanzielle Transaktionen geht.

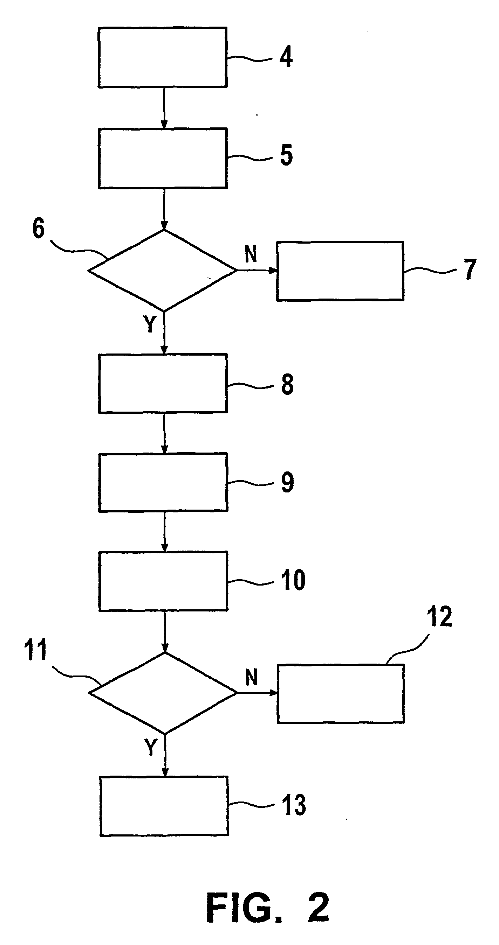

Figur 2 zeigt als Flußdiagramm das erfindungsgemäße Verfahren. In Verfahrensschritt 4 überträgt nun das User-Terminal 1 seinen öffentlichen Schlüssel über die drahtlose Verbindung zu dem Diensteserver 2. In Verfahrensschritt 5 überprüft der Registrierungsserver 3 für den Diensteserver 2, ob der Anwender 1 bereits registriert wurde. Dafür wird der öffentliche Schlüssel mit einer Datenbank des Registrierungsservers 3 abgeglichen. Alternativ ist es hier möglich, dass diese Überprüfung auch vom Diensteserver 2 selbst anhand einer entsprechenden Datenbank durchgeführt wird.

In Verfahrensschritt 6 wird nun überprüft, ob der Anwender registriert ist oder nicht. Ist das nicht der Fall, dann wird in Verfahrensschritt 7 die Authentifizierung abgebrochen und dies dem Anwender 1 mitgeteilt. Ist das jedoch der Fall, dann wird in Verfahrensschritt 8 von dem Diensteserver 2 eine nur dem Diensteserver 2 bekannte Zeichenkette mit dem ersten öffentlichen Schlüssel codiert an den Anwender 1 übertragen und zusätzlich auch noch der zweite öffentliche Schlüssel, der für den Diensteserver 2 charakteristisch ist.

In Verfahrensschritt 9 decodiert nun der Anwender 1 mit seinem privaten Schlüssel die codierte Zeichenkette und codiert sie erneut mit dem zweiten öffentlichen Schlüssel des Diensteservers 2. Dies sendet der Anwender dann dem Diensteserver 2 wieder zurück. Der Diensteserver 2 wird dann in Verfahrensschritt 10 mit seinem privaten Schlüssel die Zeichenkette erneut decodieren und führt nun einen Vergleich durch, ob die ursprünglich gesendete Zeichenkette uncodiert mit der decodierten Zeichenkette übereinstimmt. Ist das der Fall, dann wird in Verfahrensschritt 11 entschieden, dass in Verfahrensschritt 13 nun der Dienst benutzt werden kann, da der Anwender authentifiziert ist. Wird in Verfahrensschritt 11 jedoch festgestellt, dass der Vergleich nicht zu einer Übereinstimmung führt, dann wird in Verfahrensschritt 12 dem Benutzer mitgeteilt, dass er nicht authentifiziert werden konnte. Gegebenenfalls kann sich hier dann eine Registrierung des Anwenders anschließen.

Benutzt der Anwender als Terminal 1 ein öffentliches Terminal, dann kann die Codierung und Decodierung sowie die Speicherung oder Bereitstellung der Schlüssel über eine Chipkarte erfolgen, die in das Terminal eingeführt wird. Der Zugang zu dem softwarebasierten System kann über das Internet erfolgen. Das Terminal 1 beziehungsweise der Diensteserver 2 und der Registrierungsserver 3 weisen dann entsprechende Schnittstellen auf.

Die Zeichenkette kann der Diensteserver 2 beispielsweise über einen Zufallsgenerator erzeugen. Wird als Terminal 1 ein elektronischer Begleiter verwendet, dann ist es möglich eine drahtlose Verbindung zu dem Zugangsmedium, zum Beispiel das Internet, zu realisieren.

## Patentansprüche

1. Verfahren zur Authentifizierung eines Anwenders bei einem Zugang zu einem softwarebasierten System über ein Zugangsmedium (1), wobei anwenderseitig ein erster privater und ein erster öffentlicher Schlüssel bereitgestellt werden, wobei sich der Anwender bei dem softwarebasierten System (2) anmeldet, **dadurch gekennzeichnet, dass** bei der Anmeldung der erste öffentliche Schlüssel zu dem softwarebasierten System (2) übertragen wird (4), dass das softwarebasierte System (2) anhand des ersten öffentlichen Schlüssels eine Berechtigung des Anwenders überprüft (6), dass einem berechtigten Anwender von dem softwarebasierten System (2) eine Zeichenkette mit dem ersten öffentlichen Schlüssel codiert und ein zweiter öffentlicher Schlüssel jeweils übertragen werden (8), dass anwenderseitig diese Zeichenkette mit dem ersten privaten Schlüssel decodiert wird und mit dem zweiten öffentlichen Schlüssel wieder codiert zu dem softwarebasierten System zurück übertragen wird (9) und dass das softwarebasierte System den Anwender als authentifiziert erkennt (11), falls die vom Anwender empfangene und mit einem zweiten privaten Schlüssel decodierte Zeichenkette der von dem softwarebasierten System (2) codierten Zeichenkette entspricht.

2. Verfahren nach Anspruch 1, **dadurch gekennzeichnet, dass** nach der Authentifizierung anwenderseitig zu übertragende Daten zu dem softwarebasierten System mit dem zweiten öffentlichen Schlüssel codiert werden und von Seiten des softwarebasierten Systems (2) zu übertragende Daten mit dem ersten öffentlichen Schlüssel codiert werden.

3. Verfahren nach Anspruch 1 oder 2, **dadurch gekennzeichnet, dass**, wenn ein Anwender als nicht berechtigt erkannt wird, dies dem Anwender als Nachricht übertragen wird (12).

4. Verfahren nach einem der vorhergehenden Ansprüche, **dadurch gekennzeichnet, dass** als das Zugangsmedium das Internet verwendet wird.

5. Verfahren nach einem der vorhergehenden Ansprüche, **dadurch gekennzeichnet, dass** das Zugangsmedium zumindest teilweise über eine Funkstrecke realisiert wird.

6. Vorrichtung zur Durchführung des Verfahrens nach einem der Ansprüche 1 bis 5, **dadurch gekennzeichnet, dass** das softwarebasierte System einen Diensteserver (2) aufweist und anwenderseitig ein Terminal (1) vorhanden ist, wobei sowohl der Diensteserver (2) als auch der Terminal (1) jeweils eine Schnittstelle zu dem Zugangsmedium aufweisen.

7. Vorrichtung nach Anspruch 6, **dadurch gekennzeichnet, dass** der Diensteserver (2) mit einem Registrierungsserver (3) verbindbar ist, wobei der Registrierungsserver (3) überprüft, ob der Anwender anhand des ersten öffentlichen Schlüssels berechtigt ist.

8. Vorrichtung nach Anspruch 6 oder 7, **dadurch gekennzeichnet, dass** der Terminal (1) als elektronischer Begleiter ausgebildet ist.

9. Vorrichtung nach Anspruch 6, 7 oder 8, **dadurch gekennzeichnet, dass** der Diensteserver (2) als Multimediakomponente in einem Kraftfahrzeug ausgebildet ist.

10. Vorrichtung nach Anspruch 6, 7 oder 8, **dadurch gekennzeichnet, dass** der Diensteserver (2) ein Steuergerät in einem Kraftfahrzeug ist.

11. Vorrichtung nach einem der Ansprüche 6 bis 10, **dadurch gekennzeichnet, dass** die Vorrichtung eine Aufnahmevorrichtung für eine Chipkarte aufweist.

## Claims

1. Method for authenticating a user when accessing a software-based system using an access medium (1), where the user is provided with a first private and a first public key and the user logs onto the software-based system (2), **characterized in that** logon involves the first public key being transmitted (4) to the software-based system (2), **in that** the software-based system (2) uses the first public key to check (6) an authorization for the user, **in that** the software-based system (2) respectively sends (8) an authorized user a character string, coded using the first public key, and a second public key, **in that** the user decodes this character string using the first private key and returns (9) it, coded again using the second public key, to the software-based system, and **in that** the software-based system identifies (11) the user as being authenticated if the character string which has been received from the user and decoded using a second private key corresponds to the character string coded by the software-based system (2).

2. Method according to Claim 1, **characterized in that**, following authentication, data to be transmitted to the software-based system by the user are coded using the second public key and data to be transmitted by the software-based system (2) are coded using the first public key.

3. Method according to Claim 1 or 2, **characterized in that** if a user is identified as being unauthorized then this is conveyed (12) to the user in the form of a message.

4. Method according to one of the preceding claims, **characterized in that** the access medium used is the Internet.

5. Method according to one of the preceding claims, **characterized in that** the access medium is at least partly implemented via a radio link.

6. Apparatus for carrying out the method according to one of Claims 1 to 5, **characterized in that** the software-based system has a service server (2) and the user has a terminal (1), with both the service server (2) and the terminal (1) each having an interface to the access medium.

7. Apparatus according to Claim 6, **characterized in that** the service server (2) can be connected to a registration server (3), the registration server (3) checking whether the user has authorization from the first public key.

8. Apparatus according to Claim 6 or 7, **characterized in that** the terminal (1) is in the form of an electronic companion.

9. Apparatus according to Claim 6, 7 or 8, **characterized in that** the service server (2) is in the form of a multimedia component in a motor vehicle.

10. Apparatus according to Claim 6, 7 or 8, **characterized in that** the service server (2) is a control unit in a motor vehicle.

11. Apparatus according to one of Claims 6 to 10, **characterized in that** the apparatus has a holding apparatus for a chip card.

## Revendications

1. Procédé d'authentification d'un utilisateur au cours de l'accès à un système basé sur logiciel par l'intermédiaire d'un moyen d'accès (1), selon lequel une première clé privée et une première clé publique sont attribuées du côté de l'utilisateur, l'utilisateur s'annonçant auprès du système basé sur logiciel (2),
**caractérisé en ce que**
lors de l'annonce la première clé publique est transmise au système basé sur logiciel (2), le système basé sur logiciel (2) contrôle une autorisation de l'utilisateur à l'aide de la première clé publique (6), pour un utilisateur autorisé le système basé sur logiciel (2) code une chaîne de signes avec la première clé publique et la transmet (8) avec chaque fois une deuxième clé publique cette chaîne de signes est décodée du côté de l'utilisateur avec la première clé privée et est à nouveau transmise au système basé sur logiciel après nouveau codage avec la deuxième clé publique (9), et le système basé sur logiciel reconnaît l'utilisateur comme étant authentifié (11), dans le cas où la chaîne de signes reçue par l'utilisateur et décodée avec une deuxième clé privée correspond à la chaîne de signes codée par le système basé sur logiciel (2).

2. Procédé selon la revendication 1,
**caractérisé en ce qu'**
après l'authentification, des données à transmettre au système basé sur logiciel sont codées du côté de l'utilisateur avec la deuxième clé publique et des données à transmettre de la part du système basé sur logiciel (2) sont codées avec la première clé publique.

3. Procédé selon la revendication 1 ou 2,
**caractérisé en ce que**
lorsqu'un utilisateur n'est pas reconnu comme étant autorisé, ceci est transmis à l'utilisateur à titre d'information (12).

4. Procédé selon l'une quelconque des revendications précédentes,
**caractérisé en ce que**
comme moyen d'accès on utilise l'Internet.

5. Procédé selon l'une quelconque des revendications précédentes,
**caractérisé en ce que**
le moyen d'accès est réalisé au moins en partie par un canal radio.

6. Dispositif pour la mise en oeuvre du procédé selon l'une quelconque des revendications 1 à 5,
**caractérisé en ce que**
le système basé sur logiciel présente un serveur de services (2), et il y a un terminal (1) du côté de l'utilisateur, aussi bien le serveur de services (2) que le terminal (1) présentant chacun une interface vers le moyen d'accès.

7. Dispositif selon la revendication 6,
**caractérisé en ce que**
le serveur de services (2) peut être relié à un serveur d'enregistrement (3), le serveur d'enregistrement (3) contrôlant si l'utilisateur est autorisé à l'aide de la première clé publique.

8. Dispositif selon la revendication 6 ou 7,
**caractérisé en ce que**
le terminal (1) est constitué par un assistant électronique.

9. Dispositif selon la revendication 6, 7 ou 8,
**caractérisé en ce que**
le serveur de services (2) est constitué par un composant multimédia dans un véhicule automobile.

10. Dispositif selon la revendication 6, 7 ou 8,
**caractérisé en ce que**
le serveur de services (2) est un appareil de commande dans un véhicule automobile.

11. Dispositif selon l'une quelconque des revendications 6 à 10,
**caractérisé en ce que**
le dispositif présente un dispositif d'enregistrement pour une carte à puce.
